(19) Europäisches Patentamt
European Patent Office
Office européen des brevets

(11) EP 4 497 848 A1

(12) **EUROPEAN PATENT APPLICATION**
published in accordance with Art. 153(4) EPC

(43) Date of publication:
**29.01.2025 Bulletin 2025/05**

(21) Application number: **23774589.8**

(22) Date of filing: **10.03.2023**

(51) International Patent Classification (IPC):
***C25B 13/08*** *(2006.01)* ***C25B 1/02*** *(2006.01)*
***C25B 1/04*** *(2021.01)* ***C25B 9/00*** *(2021.01)*
***C25B 9/23*** *(2021.01)* ***C25B 11/052*** *(2021.01)*
***C25B 11/053*** *(2021.01)* ***C25B 11/065*** *(2021.01)*
***C25B 11/081*** *(2021.01)* ***C25B 13/02*** *(2006.01)*
***C25B 13/04*** *(2021.01)* ***H01B 1/06*** *(2006.01)*
***H01M 8/10*** *(2016.01)* ***H01M 8/1018*** *(2016.01)*
***H01M 8/1039*** *(2016.01)* ***H01M 8/1046*** *(2016.01)*
***H01M 8/1051*** *(2016.01)* ***H01M 8/1053*** *(2016.01)*
***H01M 8/1058*** *(2016.01)* ***H01M 8/1067*** *(2016.01)*

(52) Cooperative Patent Classification (CPC):
**C25B 1/02; C25B 1/04; C25B 9/00; C25B 9/23; C25B 11/052; C25B 11/053; C25B 11/065; C25B 11/081; C25B 13/02; C25B 13/04; C25B 13/08; H01B 1/06; H01M 8/10; H01M 8/1018; H01M 8/1039;** (Cont.)

(86) International application number:
**PCT/JP2023/009286**

(87) International publication number:
**WO 2023/181990 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.03.2022 JP 2022046356**
**12.07.2022 JP 2022111594**
**14.11.2022 JP 2022181573**
**14.11.2022 JP 2022181574**

(71) Applicant: **Toray Industries, Inc.**
**Tokyo 103-8666 (JP)**

(72) Inventors:
- **MINAMIBAYASHI Kenta**
**Otsu-shi, Shiga 520-8558 (JP)**
- **MATSUI Kazuma**
**Otsu-shi, Shiga 520-8558 (JP)**
- **KUNITA Tomoyuki**
**Otsu-shi, Shiga 520-8558 (JP)**
- **IKAMI Takaya**
**Otsu-shi, Shiga 520-8558 (JP)**
- **IZUHARA Daisuke**
**Otsu-shi, Shiga 520-8558 (JP)**

(74) Representative: **Hoefer & Partner Patentanwälte mbB**
**Pilgersheimer Straße 20**
**81543 München (DE)**

# (54) ELECTROLYTE MEMBRANE, ELECTROLYTE MEMBRANE WITH CATALYST LAYER, MEMBRANE ELECTRODE ASSEMBLY, AND WATER ELECTROLYSIS DEVICE

(57) An object of the present invention is to provide an electrolyte membrane having a good durability when performing water electrolysis. The gist of the present invention is an electrolyte membrane including: a first electrolyte layer having a first main surface and a second main surface; and a second electrolyte layer provided on the first main surface of the first electrolyte layer; wherein the first electrolyte layer has a thickness of 40 μm or more and 250 μm or less, and contains a polymer electrolyte; and wherein the second electrolyte layer contains a polymer electrolyte and carbon particles.



Processed by Luminess, 75001 PARIS (FR)

(Cont. next page)

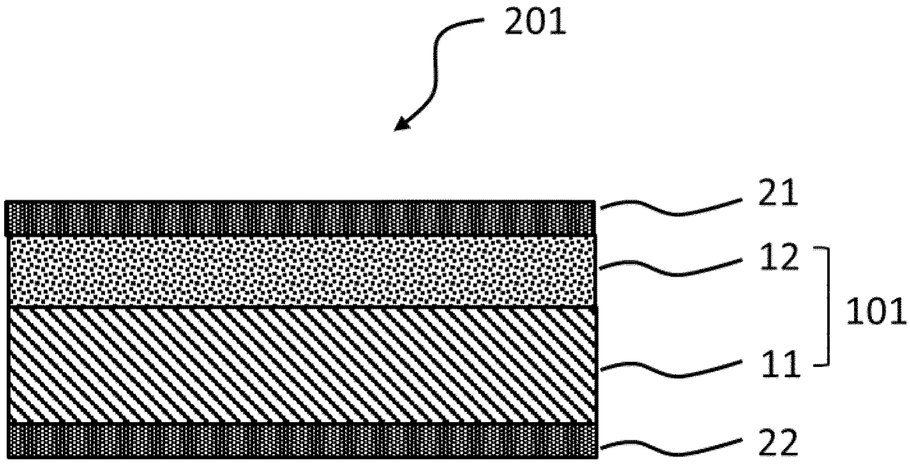


Fig. 1

(52) Cooperative Patent Classification (CPC): (Cont.)
**H01M 8/1046; H01M 8/1051; H01M 8/1053; H01M 8/1058; H01M 8/1067;** Y02E 60/50

## Description

### Technical Field

The present invention relates to an electrolyte membrane, a catalyst coated membrane, a membrane electrode assembly, and a water electrolyzer.

### Background Art

Hydrogen energy is drawing attention in recent years, as means for energy storage and transportation of the next generation. When used as a fuel for a fuel cell, hydrogen can be converted to electric power at an energy efficiency theoretically higher than that of power generation using a heat engine, and also produces no harmful emissions. Therefore, hydrogen can be a highly efficient clean energy source.
Electrolysis of water is known as one of hydrogen production methods. The electrolysis of water using surplus electricity generated by renewable energy enables to convert electric power to hydrogen energy without carbon dioxide emissions. Further, since hydrogen can be transported by a tanker truck or a tanker depending on the storage method, and can be supplied whenever to wherever needed, the electrolysis of water has a high potential as a tool for storing electric power.
Examples of the hydrogen production method by the electrolysis of water include alkaline water electrolysis and polymer electrolyte membrane water electrolysis. Of these, the polymer electrolyte membrane water electrolysis can be operated at a high current density, and has the advantage that it is capable of flexibly responding to output fluctuations of renewable energy.
On the other hand, a fluoropolymer electrolyte such as perfluorinated sulfonic acid has been conventionally and commonly known as a polymer electrolyte contained in an electrolyte membrane. In recent years, the use of a hydrocarbon-based polymer electrolyte, instead of the fluoropolymer electrolyte, has been examined, from the viewpoints of material cost and the like (see Patent Literature 1, for example).

### Citation List

#### Patent Literature

Patent Literature 1: JP 2005-133146 A

### Summary of Invention

#### Technical Problem

However, in a water electrolyzer using a polymer electrolyte membrane, for example, there is a problem in the durability of the electrolyte membrane.
In view of the above-described problem, an object of the present invention is to provide an electrolyte membrane having a good durability.

#### Solution to Problem

The present inventors found out that the above-described problem is due to the facts that polymer electrolytes are susceptible to degradation by the attack of hydrogen peroxide and hydrogen peroxide radicals, and that, in a water electrolyzer, hydrogen peroxide and hydrogen peroxide radicals are generated at the cathode, and this creates an environment in which the electrolyte membrane is susceptible to the attack, thereby completing the present invention.
Specifically, the present invention provides an electrolyte membrane including:

a first electrolyte layer having a first main surface and a second main surface; and
a second electrolyte layer provided on the first main surface of the first electrolyte layer;
wherein the first electrolyte layer has a thickness of 40 μm or more and 250 μm or less, and contains a polymer electrolyte; and
wherein the second electrolyte layer contains a polymer electrolyte and carbon particles.

Advantageous Effects of Invention

According to the present invention, it is possible to provide an electrolyte membrane having a good durability.

Brief Description of Drawings

FIG. 1 is a cross-sectional schematic diagram of one embodiment of the catalyst coated membrane according to the present invention.

Description of Embodiments

Embodiments of the present invention will be described below in detail. However, the present invention is in no way limited to the following embodiments, and various modification can be made depending on the purpose and the application.

< Electrolyte Membrane >

The electrolyte membrane according to an embodiment of the present invention includes: a first electrolyte layer having a thickness of 40 μm or more and 250 μm or less and containing a polymer electrolyte; and a second electrolyte layer provided on the first main surface of the first electrolyte layer and containing a polymer electrolyte and carbon particles. In the electrolyte membrane according to the present invention, the first electrolyte layer is a layer that provides an inherent function (such as proton conduction) of the electrolyte membrane, and the second electrolyte layer has a function of protecting the first electrolyte layer. That is, the first electrolyte layer functions as a polymer electrolyte layer, and the second electrolyte layer functions as a protective layer of the first electrolyte layer. Detailed description will be given below.

In a water electrolyzer, it is thought that oxygen generated at the anode by water electrolysis is transferred to the cathode, and reacts with hydrogen generated at the cathode to generate hydrogen peroxide and hydrogen peroxide radicals as by-products. By arranging the electrolyte membrane according to the embodiment of the present invention such that the second electrolyte layer is on the side of the cathode when used in a water electrolyzer, the transfer of the hydrogen peroxide and hydrogen peroxide radicals generated at the cathode as by-products to the first electrolyte layer is reduced. As a result, the degradation of the polymer electrolyte contained in the first electrolyte layer is reduced, leading to an improved durability. Although the mechanism thereof is not clear, it is assumed that the carbon particles contained in the second electrolyte layer are responsible for scavenging or decomposing the hydrogen peroxide and hydrogen peroxide radicals. Hereinafter, hydrogen peroxide and hydrogen peroxide radicals are collectively referred to as "hydrogen peroxides".

In view of the fact that the generation of hydrogen peroxides at the cathode is due to the transfer of oxygen generated at the anode to the cathode, as described above, it is effective to increase the thickness of the electrolyte membrane from the viewpoint of reducing the transfer of oxygen. That is, when the first electrolyte layer has a thickness of 40 μm or more, the oxygen permeability is decreased, and as a result, the effect of reducing the generation of hydrogen peroxides at the cathode can be expected. Further, having a thickness of the first electrolyte layer of 40 μm or more is effective also from the viewpoint of the durability.

In other words, having a thickness of the first electrolyte layer of 40 μm or more and providing the second electrolyte layer containing carbon particles, in the present invention, synergistically contribute to improving the durability.

[First Electrolyte Layer]

The first electrolyte layer has a thickness of 40 μm or more and 250 μm or less. The thickness of the first electrolyte layer is preferably 50 μm or more, more preferably 60 μm or more, and particularly preferably 70 μm or more, from the viewpoint of improving the durability. When the first electrolyte layer has a thickness of more than 250 μm, on the other hand, it leads to a decrease in water electrolysis performance, and it is disadvantageous from the viewpoints of material cost, productivity and workability. From the above-described points of view, the thickness of the first electrolyte layer is preferably 200 μm or less, more preferably 180 μm or less, and still more preferably 150 μm or less.

The first electrolyte layer contains a polymer electrolyte. The polymer electrolyte is not particularly limited, and it is possible to use any polymer electrolyte known in the art. In general, polymer electrolytes are broadly classified into fluoropolymer electrolytes and hydrocarbon-based polymer electrolytes, and either type of electrolyte can be used in the present invention.

The "fluoropolymer electrolyte" refers to a fluoropolymer containing an ionic group. The "fluoropolymer" refers to a polymer in which most or all of hydrogen atoms in the alkyl groups and/or alkylene groups in the molecule are substituted

with fluorine atoms.

Examples of the fluoropolymer electrolyte include perfluorinated sulfonic acid-based polymers, perfluorinated phosphonic acid-based polymers, trifluorostyrene sulfonic acid-based polymers, trifluorostyrene phosphonic acid-based polymers, ethylene tetrafluoroethylene-g-styrene sulfonic acid-based polymers, ethylene-tetrafluoroethylene copolymers, and polyvinylidene fluorideperfluorinated sulfonic acid-based polymers.

Among these, a perfluorinated sulfonic acid-based polymer is preferred from the viewpoints of heat resistance and chemical stability. Examples of such a polymer include commercially available products such as "Nafion" (registered trademark) (manufactured by The Chemours Company TT, LLC), "FLEMION" (registered trademark) (manufactured by AGC Chemicals Company) and "Asiplex" (registered trademark) (manufactured by Asahi Kasei Corporation).

In the first electrolyte layer, hydrocarbon-based polymer electrolytes are suitable as a polymer electrolyte to be used, because of their good water electrolysis performance and gas barrier properties, and relatively low material cost. On the other hand, hydrocarbon-based polymer electrolytes tend to be susceptible to degradation by the attack of hydrogen peroxides, as compared to fluoropolymer electrolytes. The use of such a hydrocarbon-based polymer electrolyte allows for improving the durability, which is a problem to be solved, while making use of its advantages, such as good water electrolysis performance.

Further, hydrocarbon-based polymer electrolytes have the characteristic that the permeability of gas such as oxygen is lower as compared to that of fluoropolymer electrolytes. Therefore, when the first electrolyte layer containing a hydrocarbon-based polymer electrolyte has a thickness of 40 $\mu$m or more, the oxygen permeability is further decreased, and the effect of reducing the generation of hydrogen peroxides at the cathode is expected.

From the above-described points of view, the electrolyte membrane according to the present invention preferably has an oxygen permeability, in an atmosphere of a temperature of 80°C and a relative humidity 90%, of $2.0 \times 10^{-8}$ $cm^3$ $(cm^2 \cdot s \cdot cmHg)^{-1}$ or less, more preferably $1.0 \times 10^{-8}$ $cm^3$ $(cm^2 \cdot s \cdot cmHg)^{-1}$ or less, and particularly preferably $0.7 \times 10^{-8}$ $cm^3$ $(cm^2 \cdot s \cdot cmHg)^{-1}$ or less. While the lower limit thereof is not particularly limited, the oxygen permeability is preferably $1.0 \times 10^{-11}$ $cm^3$ $(cm^2 \cdot s \cdot cmHg)^{-1}$ or more.

The hydrocarbon-based polymer electrolyte will be described below in detail. The "hydrocarbon-based polymer electrolyte" as used herein refers to a hydrocarbon-based polymer containing an ionic group. The "hydrocarbon-based polymer containing an ionic group" refers to a polymer having a main chain containing a hydrocarbon as a main structural unit and containing an ionic group added to the main chain or a side chain, in which polymer the main chain or the side chain is not substantially fluorinated. The expression "not substantially fluorinated" as used herein is not intended to exclude a polymer having a fluorinated portion in a very small portion of the main chain or the side chain. Specifically, the definition of the hydrocarbon-based polymer containing an ionic group includes a hydrocarbon-based polymer in which the content of fluorine atoms is less than 5% by mass per number average molecular weight of the polymer.

The hydrocarbon-based polymer electrolyte is preferably an aromatic hydrocarbon-based polymer having an aromatic ring in the main chain. The definition of the aromatic ring may include not only a hydrocarbon-based aromatic ring, but also a heterocyclic ring. Further, the polymer may partially contain an aliphatic-based unit along with an aromatic ring unit.

Specific examples of the aromatic hydrocarbon-based polymer include polymers having, in the main chain, a structure selected from the group consisting of: polysulfone, polyether sulfone, polyphenylene oxide, polyarylene ether, polyphenylene sulfide, polyphenylene sulfide sulfone, polyparaphenylene, a polyarylene-based polymer, polyarylene ketone, polyether ketone, polyarylene phosphine oxide, polyether phosphine oxide, polybenzoxazole, polybenzothiazole, polybenzimidazole, polyamide, polyimide, polyetherimide and polyimidesulfone, along with the aromatic ring.

The "polysulfone" as described above is a generic term for a structure having a sulfone bond in the molecular chain; the "polyether sulfone" is a generic term for a structure having an ether bond and a sulfone bond in the molecular chain; and the "polyether ketone" is a generic term for a structure having an ether bond and a ketone bond in the molecular chain. The aromatic hydrocarbon-based polymer may have a plurality of structures among these structures.

A polyether ketone-based polymer is particularly preferred as the aromatic hydrocarbon-based polymer. Examples of the polyether ketone-based polymer include polyether ketone, polyether ketone ketone, polyether ether ketone, polyether ether ketone ketone and polyether ketone ether ketone ketone. The polyether ketone-based polymer has a relatively low oxygen permeability, and thus is suitable as a hydrocarbon-based electrolyte in the first electrolyte layer.

In particular, the hydrocarbon-based polymer electrolyte is preferably a block copolymer having one or more of each of a segment containing an ionic group (ionic segment) and a segment containing no ionic group (non-ionic segment). The "segment" as used herein refers to a partial structure in the polymer chain of a copolymer composed of repeating units showing specific properties (for example, ionic or non-ionic properties), which structure has a molecular weight of 2,000 or more. The non-ionic segment may contain a small amount of ionic groups as long as the effects of the present invention are not adversely affected. The block copolymer has a better water electrolysis performance as compared to that of a random copolymer. Therefore, in cases where the electrolyte membrane according to the present invention is used in a water electrolyzer, it is preferred to use the block copolymer as the hydrocarbon-based polymer electrolyte in the first electrolyte

layer.

The ionic group to be contained in the hydrocarbon-based polymer electrolyte can be any ionic group having either a cation exchange capacity or an anion exchange capacity. As such a functional group, a sulfonic acid group, a sulfonimide group, a sulfuric acid group, a phosphonic acid group, a phosphoric acid group, a carboxylic acid group, an ammonium group, a phosphonium group, an amino group, an imidazolium group or the like is preferably used. The polymer can contain two or more types of ionic groups. In particular, the polymer more preferably contains at least one selected from the group consisting of a sulfonic acid group, a sulfonimide group and a sulfuric acid group, from the viewpoint of obtaining an excellent water electrolysis performance, and most preferably contains a sulfonic acid group, from the viewpoint of the raw material cost.

The hydrocarbon-based polymer electrolyte preferably has an ion exchange capacity (IEC) of 0.1 meq/g or more and 5.0 meq/g or less, from the viewpoint of the balance between proton conductivity and water resistance. The IEC is more preferably 1.0 meq/g or more, and still more preferably 1.4 meq/g or more. Further, the IEC is more preferably 3.5 meq/g or less, and still more preferably 3.0 meq/g or less. When the IEC is 0.1 meq/g or more and 5.0 meq/g or less, an excellent proton conductivity and water resistance can be achieved in a balanced manner.

The "IEC" as used herein refers to the molar amount of ionic groups introduced into the hydrocarbon-based polymer electrolyte per unit dry weight, and a higher IEC value indicates a larger amount of ionic groups introduced. In the present invention, the IEC is defined as a value determined by the neutralization titration method. The calculation of the IEC by the neutralization titration can be carried out by the method described in Examples.

In the present invention, for example, it is particularly preferred to use an aromatic hydrocarbon-based block copolymer, and more preferably a polyether ketone-based block copolymer, as the polymer electrolyte, from the viewpoint of the water electrolysis performance in a water electrolyzer. In particular, a polyether ketone-based block copolymer that includes a segment including an ionic groupcontaining structural unit (S1) and a segment including an ionic group-free structural unit (S2), such as those as shown below, can be particularly preferably used.

[Chem 1]

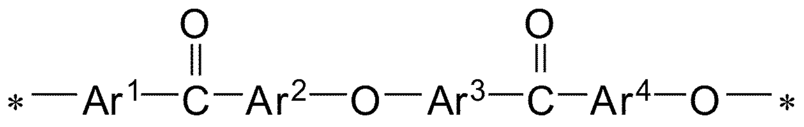
(S1)

In the general formula (S1), each of $Ar^1$ to $Ar^4$ represents an arbitrary divalent arylene group; each of $Ar^1$ and/or $Ar^2$ contains an ionic group; and each of $Ar^3$ and $Ar^4$ may but need not contain an ionic group. $Ar^1$ to $Ar^4$ may be optionally substituted, and two or more types of arylene groups may be used for $Ar^1$ to $Ar^4$ independently from one another. The symbol "*" represents a binding site to the structural unit represented by the general formula (S1) or to another structural unit.

[Chem 2]

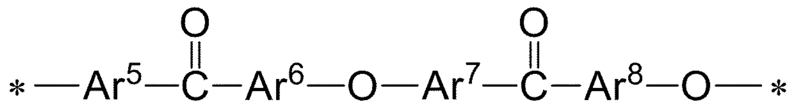
(S2)

In the general formula (S2), each of $Ar^5$ to $Ar^8$ represents an arbitrary divalent arylene group, which may be optionally substituted, but does not contain an ionic group. Two or more types of arylene groups may be used for $Ar^5$ to $Ar^8$ independently from one another. The symbol "*" represents a binding site to the structural unit represented by the general formula (S2) or to another structural unit.

In the actual polymer electrolyte corresponds to such a block copolymer, when determining whether the structural unit corresponding to the general formula (S1) or the structural unit corresponding to the general formula (S2) is contained, determination of the general formula (S1) is prioritized.

Examples of the divalent arylene group as used herein, which is preferred as each of $Ar^1$ to $Ar^8$, include: hydrocarbon-based arylene groups such as phenylene group, naphthylene group, biphenylene group and fluorenediyl group; and heteroarylene groups such as pyridinediyl group, quinoxalinediyl group and thiophenediyl group; but not limited thereto. The phenylene group as used herein can be any of three types, namely, o-phenylene group, m-phenylene group and p-phenylene group, depending on the position of the binding site between the benzene ring and another structural unit. However, the phenylene group is used as a generic term in the present specification, unless otherwise

limited. The same applies to other divalent arylene groups such as naphthylene group and biphenylene group. Each of $Ar^1$ to $Ar^8$ is preferably a phenylene group or a phenylene group containing an ionic group, and most preferably a p-phenylene group or a p-phenylene group containing an ionic group. Further, each of $Ar^5$ to $Ar^8$ may be substituted with a group other than an ionic group, but is more preferably not substituted, from the viewpoints of water electrolysis performance, chemical stability and physical durability.

In addition, the hydrocarbon-based polymer electrolyte is preferably an aromatic hydrocarbon-based polymer having a crystallinity, in order to obtain a sufficient dimensional stability, mechanical strength, physical durability, fuel barrier properties and solvent resistance. The expression "having a crystallinity" as used herein means that the polymer has crystallizable properties, namely, properties capable of being crystallized when heated, or that the polymer has already been crystallized.

The confirmation of the presence or absence of crystallinity is carried out by differential scanning calorimetry (DSC) or wide-angle x-ray diffraction. In the present invention, it is preferred that the heat of crystallization as measured by DSC after film formation be 0.1 J/g or more, or that the degree of crystallinity as measured by wide-angle x-ray diffraction be 0.5% or more. That is, in cases where no crystallization peak is observed in DSC, the case in which the polymer electrolyte has already been crystallized and the case in which the polymer electrolyte is amorphous are possible, however, in cases where the polymer electrolyte has already been crystallized, it can be confirmed by that the degree of crystallinity as measured by wide-angle x-ray diffraction becomes 0.5% or more.

The use of an aromatic hydrocarbon-based polymer having a crystallinity may sometimes results in poor workability of the resulting electrolyte layer. In such a case, a protective group may be introduced into the aromatic hydrocarbon-based polymer, to temporarily reduce the crystallinity. Specifically, performing film formation in a state where a protective group is introduced, followed by deprotection, makes it possible to obtain an electrolyte layer containing an aromatic hydrocarbon-based polymer having a crystallinity.

All or part of the polymer electrolyte contained in the first electrolyte layer is preferably a hydrocarbon-based polymer electrolyte. The first electrolyte layer preferably contains the hydrocarbon-based polymer electrolyte in an amount of 60% by mass or more, more preferably 75% by mass or more, still more preferably 90% by mass, and particularly preferably 100% by mass, with respect to the total mass of the polymer electrolyte contained in the first electrolyte layer.

The first electrolyte layer preferably includes a laminar portion (composite portion) in which a porous substrate and the polymer electrolyte are combined, in order to enhance the strength of the layer, and the embodiment of the composite portion may be, for example, an embodiment in which the polymer electrolyte is filled (impregnated) into the pores of the porous substrate. Further, the first electrolyte layer preferably includes a laminar portion (non-composite portion) which does not include the porous substrate and includes the polymer electrolyte, and which is provided on one surface or both surfaces of the composite portion. An embodiment in which the non-composite portion is provided on each of both surfaces of the composite portion is more preferred. The polymer electrolyte in the composite portion and the polymer electrolyte in the non-composite portion are preferably polymer electrolytes of the same type. The "same type" as used herein means as follows: for example, those exemplified as the above-described hydrocarbon-based polymer electrolytes are all polymer electrolytes of the same type, and those exemplified as the above-described fluoropolymer electrolyte are all polymer electrolytes of the same type.

The thickness proportion of the composite portion in the first electrolyte layer is preferably from 10 to 90%, more preferably from 20 to 80%, and particularly preferably from 30 to 70%, when the thickness of the first electrolyte layer is taken as 100%. The thickness of the laminar composite portion is determined as the thickness of the porous substrate included in the first electrolyte layer. Specifically, the thickness of the laminar composite portion is preferably within the range of from 22 to 47 $\mu$m, more preferably within the range of from 25 to 45 $\mu$m, and particularly preferably within the range of from 30 to 43 $\mu$m. The first electrolyte layer may include two or more composite portions, and in such a case, the first electrolyte layer includes the non-composite portion between the composite portions. The thickness of the non-composite portion per layer when the non-composite portion is in the form of layers is preferably 3 $\mu$m or more, more preferably 5 $\mu$m or more, and particularly preferably 10 $\mu$m or more. Furter, the thickness of the non-composite portion per layer when the non-composite portion is in the form of layers is preferably 45 $\mu$m or less, more preferably 40 $\mu$m or less, and particularly preferably 35 $\mu$m or less.

The form of the porous substrate may be, for example, a woven fabric, a nonnonwoven fabric, a porous film, a mesh woven fabric or the like. The porous substrate may be, for example, a hydrocarbon-based porous substrate containing a hydrocarbon-based polymer compound as a main component, a fluorine-based porous substrate containing a fluoropolymer compound as a main component, or the like.

Examples of the hydrocarbon-based polymer compound include polyethylene (PE), polypropylene (PP), polystyrene (PS), polyacrylate, polymethacrylate, polyvinyl chloride (PVC), polyvinylidene chloride (PVdC), polyester, polycarbonate (PC), polysulfone (PSU), polyether sulfone (PES), polyphenylene oxide (PPO), polyarylene ether-based polymers, polyphenylene sulfide (PPS), polyphenylene sulfide sulfone, polyparaphenylene (PPP), polyarylene-based polymers, polyarylene ketone, polyether ketone (PEK), polyarylene phosphine oxide, polyether phosphine oxide, polybenzoxazole (PBO), polybenzothiazole (PBT), polybenzimidazole (PBI), polyamide (PA), polyimide (PI), polyetherimide (PEI) and polyimidesulfone (PIS).

Examples of the fluoropolymer compound include polytetrafluoroethylene (PTFE), polyhexafluoropropylene, tetrafluoroethylene-hexafluoropropylene copolymers (FEP), ethylene-tetrafluoroethylene copolymers (ETFE), polyvinylidene fluoride (PVdF), polychlorotrifluoroethylene (PCTFE), perfluoroalkoxy fluororesins (PFA) and ethylene-chlorotrifluoroethylene copolymers (ECTFE).

The porous substrate has a role of reinforcing the strength of the first electrolyte layer. From the viewpoint of reinforcing a relatively thick electrolyte layer having a thickness of 40 μm or more, as in the case of the first electrolyte layer in the present invention, a porous substrate having a relatively high strength is preferred, and a mesh woven fabric is preferred from this point of view. The mesh woven fabric has a relatively larger fiber diameter and a higher strength, as compared to a porous substrate which has been conventionally and commonly used in the art. The material of the fibers constituting the mesh woven fabric is preferably a polyester, a liquid crystal polyester, polyphenylene sulfide, polyether ketone, polyether ether ketone or polyether ketone ketone. Among these, a liquid crystal polyester is particularly preferred from the viewpoint of the strength.

In an electrolyte membrane including the first electrolyte layer reinforced with a porous substrate, for example, the durability in a long-term continuous operation of water electrolysis is improved. For example, a good water electrolysis performance can be maintained, even in the case of a continuous operation of more than 1,000 hours.

The first electrolyte layer can contain any of various types of additives, such as, for example, an antioxidant, a surfactant, a radical scavenger, a hydrogen peroxide decomposer, a non-electrolyte polymer, an elastomer, a filler and/or the like, as long as the effects of the present invention are not impaired.

In cases where the first electrolyte layer includes a polymer electrolyte and a porous substrate, the total mass of the polymer electrolyte and the porous substrate is preferably 80% by mass or more, more preferably 90% by mass or more, and particularly preferably 95% by mass or more, with respect to the total mass of the first electrolyte layer. Further, in cases where the first electrolyte layer does not include a porous substrate, the mass of the polymer electrolyte is preferably 80% by mass or more, more preferably 90% by mass or more, and particularly preferably 95% by mass or more, with respect to the total mass of the first electrolyte layer.

In cases where the first electrolyte layer includes any components other than the polymer electrolyte and the porous substrate, the total mass of the other components is preferably less than 20% by mass, more preferably less than 10% by mass, and particularly preferably less than 5% by mass, with respect to the total mass of the first electrolyte layer.

[Second Electrolyte Layer]

The second electrolyte layer contains a polymer electrolyte and carbon particles. The second electrolyte layer is provided on the first main surface of the first electrolyte layer.

The carbon particles are not particularly limited, and any known carbon particles can be used. Examples of the carbon particles include carbon black, activated carbon, carbon nanotubes, carbon nanofibers and fullerene. Among these, carbon black is preferred. Examples of the carbon black include furnace black, acetylene black, thermal black, channel black, lamp black, gas black, oil black and Ketjen black.

The carbon particles preferably have a specific surface area within the range of from 30 to 2,000 $m^2/g$. Carbon particles having such a specific surface area can be expected to effectively contribute to scavenging and decomposing hydrogen peroxides.

Further, the carbon particles preferably have, as a surface functional group, an acidic group such as a phenolic hydroxyl group, a carboxy group, a quinone group or a lactone group. Carbon particles having such a surface functional group can be expected to effectively contribute to scavenging and decomposing hydrogen peroxides.

In addition, the carbon particles are preferably carbon particles on which a catalyst metal is not supported. For example, carbon particles (carbon) on which a catalyst metal such as platinum is supported have been commonly used in a catalyst layer. However, carbon particles on which such a catalyst metal is supported may fail to sufficiently provide the function of scavenging or decomposing hydrogen peroxides.

Although the carbon particles are preferably carbon particles on which a catalyst metal is not supported, as described above, the second electrolyte layer may contain a small amount of carbon particles on which a catalyst metal is supported, as long as the effects of the present invention are not impaired. The content of the carbon particles on which a catalyst metal is supported, in such a case, is preferably 20% by mass or less, more preferably 10% by mass or less, and particularly preferably 5% by mass or less, with respect to 100% by mass of the total amount of the carbon particles.

The carbon particles are expected to provide the effect of adhering the second electrolyte layer to the first electrolyte layer by an anchoring effect, in addition to contributing to scavenging and decomposing hydrogen peroxides.

The carbon particles preferably have an average primary particle size of 5 nm or more, more preferably 10 nm or more, and particularly preferably 20 nm or more, and at the same time, preferably 500 nm or less, more preferably 200 nm or less, and particularly preferably 100 nm or less, from the viewpoints of the function of scavenging and decomposing hydrogen peroxides, dispersibility, film forming properties, adhesive function and the like.

Examples of the polymer electrolyte to be contained in the second electrolyte layer include the hydrocarbon-based polymer electrolytes and fluoropolymer electrolytes described above. Among these, the second electrolyte layer preferably contains a fluoropolymer electrolyte, which is relatively less susceptible to degradation due to hydrogen peroxides. Since a fluoropolymer electrolyte is commonly used as an electrolyte in a catalyst layer, the second electrolyte layer preferably contains a fluoropolymer electrolyte, also from the viewpoint of improving the adhesion between the catalyst layer and the second electrolyte layer.

The ratio (I/C) of the mass (I) of the polymer electrolyte contained in the second electrolyte layer to the mass (C) of the carbon particles has an impact on the durability of the electrolyte membrane, the water electrolysis performance, the adhesion between the first electrolyte layer and the second electrolyte layer (referred to as "adhesion 1" for convenience), and the adhesion between the second electrolyte layer and the catalyst layer (referred to as "adhesion 2" for convenience). For example, an increase in the ratio (I/C) improves the water electrolysis performance and the adhesion 2, but it tends to result in a decrease in the durability of the electrolyte membrane and adhesion 1. Conversely, a decrease in the ratio (I/C) improves the durability of the electrolyte membrane and the adhesion 1, but it tends to result in a decrease in the water electrolysis performance and the adhesion 2.

The adhesion 1 and the adhesion 2 have an impact on the durability in a long-term continuous operation of water electrolysis. That is, decreases in the adhesion 1 and the adhesion 2 lead to a decrease in the durability, as well.

In view of the above, it is preferred to set the ratio (I/C) so that the respective properties described above are improved. The range of the ratio (I/C) is preferably 0.4 or more, more preferably 0.5 or more, and particularly preferably 0.6 or more, and at the same time, preferably 2.0 or less, more preferably 1.6 or less, and particularly preferably 1.4 or less.

The second electrolyte layer can further contain a known hydrogen peroxide decomposer and/or a radical scavenger. Examples of the hydrogen peroxide decomposer include phosphorus compounds such as polyphosphoric acid, trimethylphosphine and alkyl phosphites. Examples of the radical scavenger include: phenol-based derivatives such as 2,6-di-tert-butyl-methylphenol, 2,4-dimethyl and 2,4-di-t-butyl-6-methyl; aromatic amine derivatives such as N,N'-diphenyl-p-phenylenediamine and phenyl-β-naphthylamine; and metal compounds of metals such as Ce, Ru, Mn, Co and Fe. Among these, a Ce compound is preferred, and Ce oxide is particularly preferred.

The second electrolyte layer can contain any of various types of additives, such as, for example, a surfactant, a non-electrolyte polymer, an elastomer and/or the like, as long as the effects of the present invention are not impaired.

The content mass of the carbon particles in the second electrolyte layer is preferably 30% by mass or more, more preferably 35% by mass or more, and particularly preferably 40% by mass or more, with respect to the total mass of the second electrolyte layer. Further, the above-described proportion is preferably 75% by mass or less, more preferably 70% by mass or less, and particularly preferably 65% by mass or less.

The thickness of the second electrolyte layer is preferably 3 μm or more, more preferably 5 μm or more, and particularly preferably 7 μm or more, from the viewpoint of reducing the transfer of the hydrogen peroxides. From the viewpoints of ensuring a good water electrolysis performance and reducing the occurrence of cracks, on the other hand, the thickness of the second electrolyte layer is preferably 30 μm or less, more preferably 20 μm or less, still more preferably 17 μm or less, and particularly preferably 15 μm or less, because an increase in the thickness of the second electrolyte layer may lead to a decrease in the water electrolysis performance, or to the occurrence of cracks, possibly resulting in a decrease in the durability.

Further, the ratio (T2/T1) of the thickness (T2) of the second electrolyte membrane to the thickness (T1) of the first electrolyte layer is preferably 0.25 or less, more preferably 0.20 or less, and particularly preferably 0.15 or less, from the viewpoint of ensuring a good water electrolysis performance. From the viewpoints of reducing the transfer of hydrogen peroxides and improving the durability, on the other hand, the ratio (T2/T1) is preferably 0.05 or more, more preferably 0.06 or more, and particularly preferably 0.07 or more.

In the electrolyte membrane according to the present invention, both the first electrolyte layer and the second electrolyte layer contain a polymer electrolyte. The first electrolyte layer and the second electrolyte layer may contain the same type of polymer electrolyte, or different types of polymer electrolytes. Examples of embodiments of the electrolyte membrane include: Embodiment (I) in which both the first electrolyte layer and the second electrolyte layer contain a hydrocarbon-based polymer electrolyte; Embodiment (II) in which both the first electrolyte layer and the second electrolyte layer contain a fluoropolymer electrolyte; Embodiment (III) in which the first electrolyte layer contains a hydrocarbon-based polymer electrolyte, and the second electrolyte layer contains a fluoropolymer electrolyte; and Embodiment (IV) in which the first electrolyte layer contains a fluoropolymer electrolyte, and the second electrolyte layer contains a hydrocarbon-based polymer electrolyte. Among these, Embodiment (II) and Embodiment (III) are preferred from the viewpoint of the durability, and Embodiment (III) is particularly preferred from the viewpoints of the water electrolysis performance and the durability.

The electrolyte membrane according to the embodiment of the present invention is preferably a proton exchange membrane, as described above, but may be an anion exchange membrane.

Further, each of the polymer electrolyte contained in the first electrolyte layer and the polymer electrolyte contained in the second electrolyte layer may be a mixture of two or more types polymer electrolytes. In such a case, the

description of each of the Embodiment (I) to Embodiment (IV) above is understood based on the polymer electrolyte which is contained in the largest amount.

[Catalyst Coated Membrane]

The catalyst coated membrane can be formed by laminating respective catalyst layers on both surfaces of the electrolyte membrane according to the embodiment of the present invention. That is, the catalyst coated membrane includes a catalyst layer on each of both surfaces of the electrolyte membrane according to the present invention (such the electrolyte membrane may be simply referred to as the "electrolyte membrane", hereafter). For example, the catalyst coated membrane includes: a cathode catalyst layer on the side of the first main surface of the first electrolyte layer of the electrolyte membrane; and an anode catalyst layer on the side of the second main surface of the first electrolyte layer of the electrolyte membrane.

FIG. 1 is a cross-sectional schematic diagram of one embodiment of the catalyst coated membrane according to the present invention. In a catalyst coated membrane 201, a cathode catalyst layer 21 is laminated on the side of the first main surface of a first electrolyte layer 11 in an electrolyte membrane 101, namely, on the side of a second electrolyte layer 12, and an anode catalyst layer 22 is laminated on the side of the second main surface.

Another layer can be interposed between the first electrolyte layer 11 and the second electrolyte layer 12, and between the second electrolyte layer 12 and the cathode catalyst layer 21. In the catalyst coated membrane according to the embodiment of the present invention, it is preferred that the first electrolyte layer 11, the second electrolyte layer 12 and the cathode catalyst layer 21 are laminated so as to be in contact with one another in the order mentioned, without interposing other layers between the respective layers. By this arrangement, the effect of reducing an increase in the membrane resistance and the effect of enhancing the water electrolysis performance can be expected. In particular, the second electrolyte layer 12 and the cathode catalyst layer 21 are preferably arranged in abutment with each other.

[Catalyst Layers]

In general, catalyst layers are layers containing catalyst particles and a polymer electrolyte. Each catalyst layer is formed by laminating a layer on the electrolyte membrane according to the present invention, using a coating solution for forming a catalyst layer obtained by further adding catalyst particles to a polymer electrolyte solution, by a coating method or a transfer method. A fluoropolymer electrolyte such as one described above is commonly used as the polymer electrolyte. Further, a perfluorinated sulfonic acid-based polymer is preferably used from the viewpoints of gas diffusivity and durability.

In general, particles of a metal such as a platinum group element (platinum, ruthenium, rhodium, palladium, osmium or iridium), iron, lead, gold, silver, copper, chromium, cobalt, nickel, manganese, vanadium, molybdenum, gallium or aluminum, or an alloy, an oxide or a complex oxide thereof or the like, are used as the catalyst particles. In addition, carbon particles supporting any of the above-described catalyst metals (catalyst metal-supported carbon particles) are also commonly used. The carbon particles of the catalyst metal-supported carbon particles described above are not particularly limited, as long as they are in the form of fine particles having an electrical conductivity, and do not corrode or degrade by the reaction with a catalyst. Any of carbon black, graphite, activated carbon, carbon fibers, carbon nanotubes and fullerene particles can be preferably used as the carbon particles.

The mass ratio (catalyst particles/polymer electrolyte) of the content of the catalyst particles to the content of the polymer electrolyte, in each catalyst layer, is generally within the range of from 1 to 15, and preferably within the range of from 1.5 to 13.

The thickness of each catalyst layer is preferably 0.1 μm or more, more preferably 0.5 μm or more, and particularly preferably 1 μm or more, from the viewpoints of the gas diffusivity and the durability. Further, the thickness of each catalyst layer is preferably 500 μm or less, more preferably 100 μm or less, and particularly preferably 30 μm or less.

The cathode catalyst layer and the anode catalyst layer may be made of the same material or different materials. In the case of using the catalyst coated membrane in a water electrolyzer, any catalyst that generates hydrogen from protons or water as the raw material can be used as the catalyst particles, in the cathode catalyst layer, and it is preferred to use platinum-supported carbon particles.

In the anode catalyst layer, any catalyst that generates oxygen from water or a hydroxide as the raw material can be used as the catalyst particles, and it is preferred to use the particles of a noble metal such as iridium, ruthenium, rhodium or palladium, or an oxide thereof. At this time, the catalyst particles by themselves alone can be mixed with ionomers to form the catalyst layer, or alternatively, the catalyst particles can be supported on titanium oxide or the like, and then mixed with ionomers to form the catalyst layer.

[Membrane Electrode Assembly]

A membrane electrode assembly includes the catalyst coated membrane described above, and electrodes (gas diffusion electrodes) provided on both surfaces of the catalyst coated membrane. A specific example thereof is one in which a cathode gas diffusion electrode is provided on the side of the cathode catalyst layer of the catalyst coated membrane, and an anode gas diffusion electrode is provided on the side of the anode catalyst layer of the catalyst coated membrane.

In general, each gas diffusion electrode is made of a member having gas permeability and electronic conductivity, such as, for example, a porous carbon or a porous metal. The porous carbon may be, for example, a carbon paper, a carbon cloth, a carbon mesh or a carbon nonwoven fabric. The porous metal may be, for example, a metal mesh, a foamed metal, a metal woven fabric, a metal sintered product or a metal nonwoven fabric. Examples of the metal constituting the porous metal include titanium, aluminum, copper, nickel, nickel-chromium alloys, copper and alloys thereof, silver, aluminum alloys, zinc alloys, lead alloys, titanium, niobium, tantalum, iron, stainless steel, gold and platinum.

Each gas diffusion electrode can also be subjected to a hydrophobic treatment for preventing decreases in the gas diffusivity and the permeability due to water retention, a partial hydrophobic treatment and a partial hydrophilic treatment for forming a water discharge path, the addition of a carbon powder for decreasing the resistance, and/or the like. Further, each gas diffusion electrode can be provided with an electrically conductive intermediate layer containing at least an electrically conductive inorganic substance and a hydrophobic polymer, on the side of the catalyst coated membrane. In the case of a gas diffusion electrode including a gas diffusion layer made of a carbon fiber woven fabric or a nonwoven fabric having a high porosity, in particular, providing the electrically conductive intermediate layer makes it possible to reduce a decrease in performance due to the penetration of the catalyst solution into the gas diffusion layer.

The thickness of each gas diffusion layer is preferably 50 μm or more, more preferably 100 μm or more, and particularly preferably 200 μm or more. Further, the thickness of each gas diffusion layer is preferably 2,000 μm or less, more preferably 1,500 μm or less, and particularly preferably 1,000 μm or less.

The cathode gas diffusion electrode and the anode gas diffusion electrode may be made of the same material or different materials. In the case of using the membrane electrode assembly in a water electrolyzer, the cathode gas diffusion electrode and the anode gas diffusion electrode are preferably made of different materials. For example, the cathode gas diffusion electrode is preferably made of a porous carbon, and the anode gas diffusion electrode is preferably made of a porous metal.

[Method of Producing Electrolyte Membrane]

The method of producing the electrolyte membrane will be described below. First, the method of producing the first electrolyte layer will be described. The first electrolyte layer can be obtained, for example, by coating a polymer electrolyte solution on a base material (the base material used for forming the first electrolyte layer is hereinafter sometimes referred to as "base material for membrane formation" for convenience), followed by drying. The base material for membrane formation is not particularly limited, but is preferably a polyester, and particularly preferably polyethylene terephthalate. The base material for membrane formation is eventually peeled off and removed, and thus may be subjected to a mold release treatment, if necessary.

The first electrolyte layer may also have a form in which a polymer electrolyte layer is provided on one surface or both surfaces of the laminar composite portion including a porous substrate and a polymer electrolyte. Examples of the method of producing the first electrolyte layer having the above-described form include: a method in which a polymer electrolyte solution is coated on a base material for membrane formation, and a porous substrate is pasted on the coated solution, to impregnate the porous substrate with the polymer electrolyte solution; and a method in which the polymer electrolyte solution is further coated on the porous substrate which has been impregnated with the polymer electrolyte solution by the above-described method, followed by drying.

It is also possible to use, as the polymer electrolyte, a polymer electrolyte in a state where a salt of an ionic group and a cation of an alkali metal or an alkaline earth metal is formed. In such a case, it is preferred to perform an acid treatment for exchanging the cation of the alkali metal or the alkaline earth metal with a proton, after forming the first electrolyte layer on the base material for membrane formation. At this time, the acid treatment can be performed by a known method.

The electrolyte membrane according to the embodiment of the present invention can be produced by laminating the second electrolyte layer on the first electrolyte layer produced as described above. The second electrolyte layer can be laminated by the coating method or the transfer method.

The coating method is a method in which a coating solution for forming a second electrolyte layer is coated on the first electrolyte layer formed on the base material for membrane formation, followed by drying, to laminate the second electrolyte layer. The transfer method is a method in which a transfer sheet obtained by laminating the second electrolyte layer on a base material for transfer (the base material used as a support for transfer is hereinafter sometimes referred to as "base material for transfer" for convenience), and the first electrolyte layer formed on the base material for membrane

formation, are heat-pressed, to transfer the second electrolyte layer on the first electrolyte layer. It is possible to use, as the base material for transfer, a plastic film, a polytetrafluoroethylene film, a polyimide film or the like, which is the same as that for the base material for membrane formation described above. Such a base material for transfer is peeled off at an appropriate timing, after laminating the second electrolyte layer on the first electrolyte layer.

[Method of Producing Catalyst Coated Membrane]

The catalyst layers can be laminated on the electrolyte membrane according to the embodiment of the present invention, for example, by a method such as the coating method, the transfer method, or a combination of the coating method and the transfer method. Such a method is not particularly limited, and any known method can be used.

The coating method can be performed by coating a coating solution for forming a catalyst layer on the electrolyte membrane, using the coating method described above. Specifically, the coating method may be, for example, a method in which a coating solution for forming a cathode catalyst layer is coated on the side of the second electrolyte layer of the electrolyte membrane, followed by drying, to form a cathode catalyst layer, and a coating solution for forming an anode catalyst layer is coated on the opposite surface of the electrolyte membrane, followed by drying, to form an anode catalyst layer. The cathode catalyst layer and the anode catalyst layer may be laminated in the order opposite to that described above. In the case of using the coating method, it is preferred that the base material for membrane formation be laminated in advance, on the surface of the electrolyte membrane opposite to the surface to be coated with the coating solution for forming a catalyst layer.

The transfer method may be, for example, a method in which: a cathode catalyst layer transfer sheet obtained by laminating a cathode catalyst layer on a base material for transfer, and an anode catalyst layer transfer sheet obtained by laminating an anode catalyst layer on a base material for transfer are separately prepared; the cathode catalyst layer transfer sheet is pasted on the side of the second electrolyte layer of the electrolyte membrane, and the anode catalyst layer transfer sheet is pasted on the opposite surface (the surface on the side of the first electrolyte layer) of the electrolyte membrane; and the resulting laminate is heat-pressed, to transfer each of the anode catalyst layer and the cathode catalyst layer. It is possible to use, as each base material for transfer, a plastic film, a polytetrafluoroethylene film, a polyimide film or the like, which is the same as that for the base material for membrane formation described above. These base materials for transfer are peeled off at an appropriate timing, after laminating the respective catalyst layers on the electrolyte membrane.

The combination of the coating method and the transfer method may be, for example, a method in which: a coating solution for forming a cathode catalyst layer is first coated on the side of the second electrolyte layer of the electrolyte membrane, followed by drying, to form a cathode catalyst layer; then an anode catalyst layer transfer sheet is pasted on the opposite surface of the electrolyte membrane; and the resulting laminate is heat-pressed, to transfer the anode catalyst layer. Conversely, the combination of the methods may be a method in which a coating solution for forming an anode catalyst layer is coated, and the cathode catalyst layer is transferred.

[Combined Production Method of Electrolyte Membrane and Catalyst Coated Membrane]

The term "combined production method" refers to a production method in which the electrolyte membrane is completed in the production process of the catalyst coated membrane. The combined production method may be, for example, a method in which the first electrolyte layer formed on a base material for membrane formation, and a transfer sheet obtained by sequentially laminating the cathode catalyst layer and the second electrolyte layer on a base material for transfer, are heat-pressed, to simultaneously laminate the second electrolyte layer and the cathode catalyst layer on the first electrolyte layer.

In the above-described method, the anode catalyst layer can be laminated on the electrolyte membrane by the coating method or the transfer method, but the transfer method is preferred from the viewpoint of productivity.

In the catalyst coated membrane produced by the above-described method, the adhesion between the second electrolyte layer and the cathode catalyst layer is improved to achieve a decrease in interface resistance, and as a result, improvements in initial water electrolysis performance and durability can be expected.

The method of producing the catalyst coated membrane described above includes the following steps (1) to (5) in the order mentioned:

(1) the step of forming the first electrolyte layer on a base material for membrane formation;
(2) the step of sequentially laminating the cathode catalyst layer and the second electrolyte layer on a base material for transfer, to obtain a cathode catalyst layer transfer sheet;
(3) the step of laminating the anode catalyst layer on a base material for transfer, to obtain an anode catalyst layer transfer sheet;
(4) the step of peeling off the base material for membrane formation from the first electrolyte layer; and

(5) the step of laminating the cathode catalyst layer transfer sheet on one surface of the first electrolyte layer, and laminating the anode catalyst layer transfer sheet on the other surface thereof, and heat-pressing the resulting laminate in this state.

[Application Example]

Each of the electrolyte membrane, the catalyst coated membrane and the membrane electrode assembly according to the present invention can be used in various applications. For example, each of the above can be used in medical applications such as extracorporeal circulation columns and artificial skins, filtration applications, ion exchange resin applications, various structural material applications, and electrochemical applications. Among these, each of the above can be more preferably used in various types of electrochemical applications. Examples of the electrochemical applications include fuel cells, redox flow batteries, water electrolyzers and electrochemical hydrogen compressors. Among these, each of the above is preferably used in a water electrolyzer, and particularly preferably in a water electrolysis hydrogen generator.

The water electrolyzer or the water electrolysis hydrogen generator in which any of the electrolyte membrane, the catalyst coated membrane and the membrane electrode assembly according to the present invention is used, is preferably a proton exchange-type device.

Examples

The present invention will be described below in further detail with reference to Examples. However, the present invention is in no way not limited to these Examples. Various measurement conditions are as follows.

(1) Molecular Weight of Polymer

The number average molecular weight and the weight average molecular weight of each polymer were measured by GPC. HLC-8022 GPC manufactured by Tosoh Corporation was used as a gel permeation chromatograph apparatus. Further, two TSK gel Super HM-H columns (inner diameter: 6.0 mm, length: 15 cm) manufactured by Tosoh Corporation were used as GPC columns. The measurement was carried out using N-methyl-2-pyrrolidone solvent (a N-methyl-2-pyrrolidone solvent containing 10 mmol/L of lithium bromide), at a flow rate of 0.2 mL/min, and the number average molecular weight and the weight average molecular weight in terms of standard polystyrene were determined.

(2) Ion Exchange Capacity (IEC)

The ion exchange capacity was measured by the neutralization titration method including the following procedures 1) to 4). The measurement was repeated three times, and the mean value of the measured values was taken as the ion exchange capacity.

1) After wiping the moisture of each block copolymer which had been subjected to proton exchange and sufficiently washed with pure water, the polymer was vacuumdried at 100°C for 12 hours or more, to determine the dry weight thereof.
2) A quantity of 50 mL of a 5wt% aqueous solution of sodium sulfate was added to the block copolymer, and left to stand for 12 hours to carry out ion exchange.
3) A 0.01 mol/L aqueous solution of sodium hydroxide was used to titrate the sulfuric acid produced. A commercially available 0.1 w/v% phenolphthalein solution for titration, as an indicator, was added, and the point at which the solution turned pale reddish violet was determined as the end point.
4) The IEC was determined by the following equation:

IEC (meq/g) = [concentration (mmol/ml) of aqueous solution of sodium hydroxide × amount added dropwise (ml)] / dry weight (g) of sample.

(3) Measurements of Thicknesses of Electrolyte Membrane and Catalyst Layers

Cross sections of the resulting electrolyte membrane and catalyst coated membrane were observed by a scanning electron microscope (SEM) in accordance with the following conditions, and the thicknesses of the first electrolyte layer and the second electrolyte layer in the electrolyte membrane as well as the thicknesses of the catalyst layers were measured, from the obtained images.

Apparatus: A field emission scanning electron microscope (FE-SEM) S-4800 (manufactured by Hitachi High-Technologies Inc.)
Acceleration voltage: 2.0 kV
Pretreatment: A cross-sectional sample prepared by the BIB method was coated with Pt, and used for the measurement.
BIB method: A cross-sectional sample preparation apparatus using an argon ion beam. A shielding plate was placed immediately above the sample, and etching was performed by irradiating a broad argon ion beam from above the shielding plate, to prepare a surface (cross section) for observation and analysis.

(4) Evaluation of Water Electrolysis Performance and Durability

In each Example and Comparative Example, a catalyst coated membrane and a membrane electrode assembly were prepared in the following manner, in order to evaluate the water electrolysis performance and the durability of the electrolyte membrane.

[Preparation of Catalyst Coated Membrane (Excluding Example 20)]

The following cathode catalyst layer was laminated on the side of the first main surface (on the side of the second electrolyte layer) of the first electrolyte layer of the electrolyte membrane, and the following anode catalyst layer was laminated on the side of the second main surface of the electrolyte membrane, to prepare a catalyst coated membrane. The cathode catalyst layer and the anode catalyst layer each had a dry thickness of 10 μm.

< Cathode Catalyst Layer >

The cathode catalyst layer contains 10 parts by mass of catalyst particles (TEC10E50E, platinum catalyst supported carbon particles (platinum supporting rate: 50% by mass) manufactured by Tanaka Kikinzoku Kogyo K.K.), and 5 parts by mass in terms of solid content of a fluoropolymer electrolyte ("Nafion" (registered trademark), product number: D2020, manufactured by The Chemours Company TT, LLC).

< Anode Catalyst Layer >

The anode catalyst layer contains 10 parts by mass of catalyst particles (Elyst Ir 75 0480, an $IrO_2$ catalyst (Ir content: 75%) manufactured by Umicore S.A.), and 1.5 parts by mass in terms of solid content of a fluoropolymer electrolyte ("Nafion" (registered trademark), product number: D2020, manufactured by The Chemours Company TT, LLC).

[Membrane Electrode Assembly]

A commercially available gas diffusion electrode, 24BCH, manufactured by SGL Carbon AG, as a cathode gas diffusion layer, was laminated on the side of the cathode catalyst layer of the catalyst coated membrane prepared as described above, and a commercially available porous titanium sintered plate, as an anode gas diffusion layer, was laminated on the side of the anode catalyst layer of the catalyst coated membrane, to prepare a membrane electrode assembly.

[Evaluation of Water Electrolysis Performance and Durability]

The membrane electrode assembly prepared as described above was set to a JARI standard cell "Ex-1" (electrode surface area: 25 $cm^2$) manufactured by Eiwa Corporation. The cell was closed so as to achieve an average CCM pressure of 4 MPa, and the cell temperature was controlled to 80°C. Deionized water having an electrical conductivity of 1 μS/cm or less was supplied to both the cathode electrode and the anode electrode at a flow rate of 0.2 L/min and at an atmospheric pressure, and a current of 2 A/$cm^2$ was applied to the electrodes, to produce hydrogen gas and oxygen gas by the water electrolysis reaction. The initial applied voltage to the cell at this time was defined as the water electrolysis performance. A lower initial applied voltage indicates a better water electrolysis performance.
The durability was evaluated by the rate of increase from the initial applied voltage ($V_0$) to the voltage ($V_1$) after continuously applying a current of 2 A/$cm^2$ for 200 hours. A lower rate of voltage increase indicates a better durability. The rate of voltage increase was calculated from the following equation:

$$\text{Rate of voltage increase (\%)} = (V_1 - V_0) / (V_0) \times 100.$$

It can be said that a lower rate of voltage increase indicates a better durability performance. When the rate of voltage increase in 200-hour operation determined as described above is increased, the degradation of the electrolyte membrane may be accelerated in a further long-term continuous operation. Therefore, the rate of voltage increase described above is preferably 4.0% or less, more preferably 3.0% or less, still more preferably 2.0% or less, and particularly preferably 1.0% or less.

[Polymer Synthesis]

[Synthesis Example 1]

(Synthesis of 2,2-Bis(4-hydroxyphenyl)-1,3-dioxolane (K-DHBP) Represented by the Following Chemical Formula (G1))

Into a 500 mL flask equipped with a stirrer, a thermometer and a distillation tube, 49.5 g of 4,4'-dihydroxybenzophenone, 134 g of ethylene glycol, 96.9 g of trimethyl orthoformate and 0.50 g of p-toluenesulfonic acid monohydrate were introduced, and these components were dissolved. Thereafter, the resulting solution was stirred for two hours while maintaining the temperature within the range of from 78 to 82°C. Further, the internal temperature was gradually raised to 120°C, and heating was continued until the distillation of methyl formate, methanol and trimethyl orthoformate completely stopped. After cooling the resulting reaction liquid to room temperature, the reaction liquid was diluted with ethyl acetate, and the organic layer was washed with 100 mL of a 5% aqueous solution of potassium carbonate, and separated. Thereafter, the solvent was removed by distillation. A quantity of 80 mL of dichloromethane was added to the residue to allow crystals to precipitate, the resulting crystals were filtered and dried, to obtain 52.0 g of 2,2-bis(4-hydroxyphenyl)-1,3-dioxolane represented by the following chemical formula (G1). The GC analysis revealed that the thus obtained crystals were composed of 99.9% of 2,2-bis(4-hydroxyphenyl)-1,3-dioxolane and 0.1% of 4,4'-dihydroxybenzophenone. The resulting 2,2-bis(4-hydroxyphenyl)-1,3-dioxolane had a purity of 99.9%.

[Chem 3]

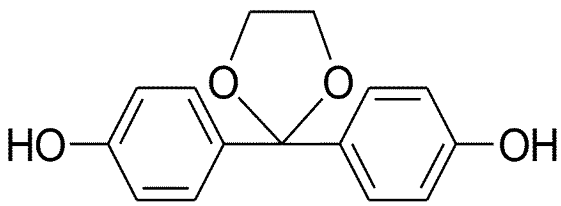

(G1)

[Synthesis Example 2]

(Synthesis of Disodium-3,3'-disulfonate-4,4'-difluorobenzophenone Represented by the Following Chemical Formula (G2))

A quantity of 109.1 g of 4,4'-difluorobenzophenone (a reagent manufactured by Sigma-Aldrich Co. LLC.) was allowed to react in 150 mL of fuming sulfuric acid (50% $SO_3$) (a reagent manufactured by FUJIFILM Wako Pure Chemical Corporation) at 100°C for 10 hours. Thereafter, the resulting reaction liquid was introduced into a large amount of water little by little, neutralized with NaOH, and then 200 g of salt (NaCl) was added to allow the synthesized product to precipitate. The resulting precipitates were separated by filtration, and recrystallized with an aqueous solution of ethanol, to obtain disodium-3,3'-disulfonate-4,4'-difluorobenzophenone represented by the following chemical formula (G2). The resulting disodium-3,3'-disulfonate-4,4'-difluorobenzophenone had a purity of 99.3%.

[Chem 4]

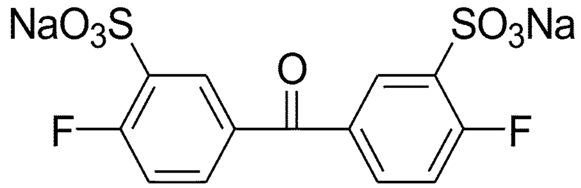

(G2)

[Synthesis Example 3]

(Synthesis of Non-ionic Oligomer a1 Represented by the Following General Formula (G3))

Into a 2,000 mL SUS polymerization apparatus equipped with a stirrer, a nitrogen introduction pipe and a Dean-Stark trap, 16.59 g of potassium carbonate (a reagent manufactured by Sigma-Aldrich Co. LLC., 120 mmol), 25.83 g of K-DHBP (100 mmol) obtained in Synthesis Example 1, and 20.3 g of 4,4'-difluorobenzophenone (a reagent manufactured by Sigma-Aldrich Co. LLC., 93 mmol) were introduced. After nitrogen replacement, 300 mL of N-methylpyrrolidone (NMP) and 100 mL of toluene were added to the apparatus, the resulting mixture was dehydrated at 150°C, then heated to remove toluene, and polymerization was carried out at 170°C for three hours. The polymerization solution was purified by reprecipitation with a large amount of methanol, to obtain a hydroxy-terminated non-ionic oligomer a1. The resulting hydroxy-terminated non-ionic oligomer a1 had a number average molecular weight of 10,000.

Into a 500 mL three-neck flask equipped with a stirrer, a nitrogen introduction pipe and a Dean-Stark trap, 1.1 g of potassium carbonate (a reagent manufactured by Sigma-Aldrich Co. LLC., 8 mmol), and 20.0 g (2 mmol) of the hydroxy-terminated non-ionic oligomer a1 were introduced. After replacing the interior of the apparatus with nitrogen, 100 mL of NMP and 30 mL of toluene were added, the resulting mixture was dehydrated at 100°C, and then heated to remove toluene. Further, 2.2 g of hexafluorobenzene (a reagent manufactured by Sigma-Aldrich Co. LLC., 12 mmol) was added, and the reaction was allowed to proceed at 105°C for 12 hours. The resulting reaction liquid was purified by reprecipitation with a large amount of isopropyl alcohol, to obtain a non-ionic oligomer a1 (terminal: fluoro group) represented by the following general formula (G3). The resulting non-ionic oligomer a1 had a number average molecular weight of 11,000.

[Chem 5]

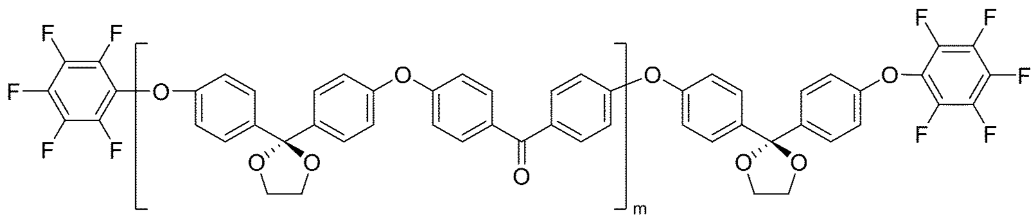

(G3)

[Synthesis Example 4]

(Synthesis of Ionic Oligomer a2 Represented by the Following General Formula (G4))

Into a 2,000 mL SUS polymerization apparatus equipped with a stirrer, a nitrogen introduction pipe and a Dean-Stark trap, 27.6 g of potassium carbonate (a reagent manufactured by Sigma-Aldrich Co. LLC., 200 mmol), 12.9 g of K-DHBP (50 mmol) obtained in Synthesis Example 1, 9.3 g of 4,4'-biphenol (a reagent manufactured by Sigma-Aldrich Co. LLC., 50 mmol), 39.3 g of disodium-3,3'-disulfonate-4,4'-difluorobenzophenone (93 mmol) obtained in Synthesis Example 2, and 17.9 g of 18-crown-6 (manufactured by FUJIFILM Wako Pure Chemical Corporation, 82 mmol) were introduced. After nitrogen replacement, 300 mL of NMP and 100 mL of toluene were added to the apparatus, the resulting mixture was dehydrated at 150°C, then heated to remove toluene, and polymerization was carried out at 170°C for 6 hours. The polymerization solution was purified by reprecipitation with a large amount of isopropyl alcohol, to obtain an ionic oligomer a2 (terminal: hydroxy group) represented by the following general formula (G4). The resulting ionic oligomer a2 had a number average molecular weight of 16,000. In the general formula (G4), M represents a hydrogen atom, Na or K.

[Chem 6]

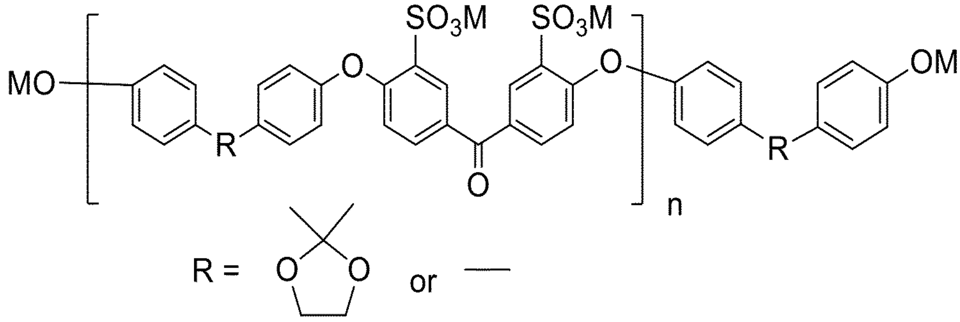

(G4)

[Synthesis Example 5]

(Synthesis of Neopentyl 3-(2,5-Dichlorobenzoyl) benzenesulfonate Represented by the Following Chemical Formula (G5))

Into a 3 L three-neck flask equipped with a stirrer and a cooling pipe, 245 g (2.1 mol) of chlorosulfonic acid was introduced. Subsequently, 105 g (420 mmol) of 2,5-dichlorobenzophenone was added to the flask, and the resulting mixture was allowed to react in an oil bath at 100°C for 8 hours. After a predetermined period of time, the resulting reaction liquid was slowly poured onto 1,000 g of crashed ice, and then extracted with ethyl acetate. The organic layer was washed with brine, dried with magnesium sulfate, and then ethyl acetate was removed by distillation, to obtain pale yellow coarse crystals of 3-(2,5-dichlorobenzoyl)benzenesulfonic acid chloride. The coarse crystals were used as it is, without purification, in the next step.

A quantity of 41.1 g (462 mmol) of 2,2-dimethyl-1-propanol (neopentyl alcohol) was added to 300 mL of pyridine, and the resulting mixture was cooled to about 10°C. To the mixture, coarse crystals obtained as described above was gradually added over about 30 minutes. After adding the entire amount of crystals, the resultant was stirred for another 30 minutes, and allowed to react. After the completion of the reaction, the reaction liquid was poured into 1,000 mL of hydrochloric acid solution, and the precipitated solid was collected. The resulting solid was dissolved in ethyl acetate, washed with an aqueous solution of sodium hydrogen carbonate and with brine, and then dried with magnesium sulfate. Thereafter, ethyl acetate was removed by distillation, to obtain coarse crystals. The coarse crystals were recrystallized with methanol, to obtain white crystals of neopentyl 3-(2,5-dichlorobenzoyl) benzenesulfonate represented by the following chemical formula (G5).

[Chem 7]

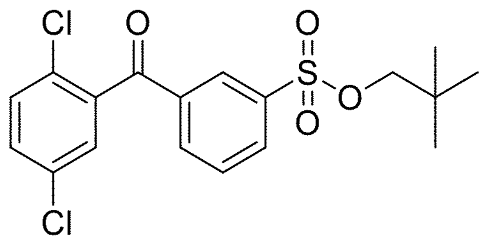

(G5)

[Synthesis Example 6]

(Synthesis of Non-ionic Oligomer Represented by the Following General Formula (G6))

Into a 1 L three-neck flask equipped with a stirrer, a thermometer, a cooling pipe, a Dean-Stark tube, and a three-way cock for introducing nitrogen, 49.4 g (0.29 mol) of 2,6-dichlorobenzonitrile, 88.4 g (0.26 mol) of 2,2-bis(4-hydroxyphenyl)-1,1,1,3,3,3-hexafluoropropane, and 47.3 g (0.34 mol) of potassium carbonate were weighed. After nitrogen replacement, 346 mL of sulfolane and 173 mL of toluene were added to the flask, followed by stirring. The flask was dipped in an oil bath, and the mixture was heated to reflux at 150°C. When the reaction was allowed to proceed while azeotropically distilling the water produced by the reaction with toluene and removing the water outside the system through the Dean-Stark tube, the production of water was barely observed after about three hours. After removing most of

the toluene while gradually increasing the reaction temperature, the reaction was allowed to continue at 200°C for three hours. Subsequently, 12.3 g (0.072 mol) of 2,6-dichlorobenzonitrile was added to the flask, and the reaction was allowed to continue for another 5 hours.

The resulting reaction liquid was left to cool, and then 100 mL of toluene was added to dilute the reaction liquid. The precipitates of inorganic compounds produced as by-products were removed by filtration, and the resulting filtrate was introduced into 2 1 of methanol. The precipitated product was separated by filtration, collected and dried, and then dissolved in 250 mL of tetrahydrofuran. The resulting solution was subjected to reprecipitation in 2 L of methanol, to obtain 107 g of a non-ionic oligomer of interest represented by the following general formula (G6). The non-ionic oligomer had a number average molecular weight of 11,000.

[Chem 8]

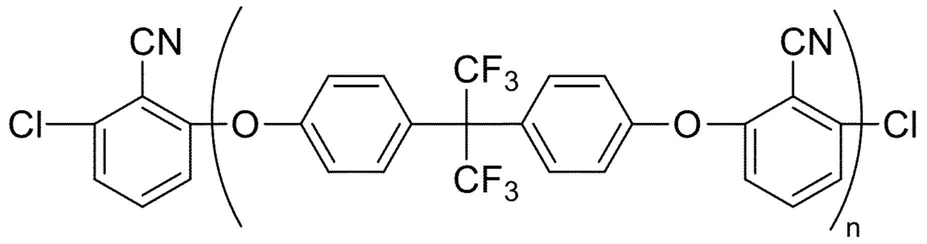

(G6)

[Synthesis Example 7]

(Synthesis of Polyether Sulfone (PES)-based Block Copolymer Precursor b1

Including Segment Represented by the Following Chemical Formula (G8) and Segment Represented by the Following General Formula (G9))

A quantity of 1.62 g of anhydrous nickel chloride and 15 mL of dimethyl sulfoxide were mixed, and adjusted to 70°C. To the resultant, 2.15 g of 2,2'-bipyridyl was added, and the resulting mixture was stirred for 10 minutes at the same temperature, to prepare a nickel-containing solution.

To a solution obtained by dissolving 1.49 g of (2,2-dimethylpropyl) 2,5-dichlorobenzene sulfonate and 0.50 g of SUMIKAEXCEL PES5200P (Mn: 40,000, Mw: 94,000; manufactured by Sumitomo Chemical Co., Ltd.) represented by the following general formula (G7) in 5 mL of dimethyl sulfoxide, 1.23 g of zinc powder was added, and the resulting mixture was adjusted to 70°C. The nickel-containing solution prepared above was poured into the above mixture, and the reaction was allowed to proceed at 70°C for 4 hours. The reaction mixture was introduced into 60 mL of methanol, and then 60 mL of 6 mol/L hydrochloric acid was added thereto, followed by stirring for one hour. The precipitated solid was separated by filtration and dried, to obtain a grayish white block copolymer precursor b1 including segments represented by the following general formula (G8) and the following general formula (G9). The block copolymer precursor b1 had a weight average molecular weight of 230,000.

[Chem 9]

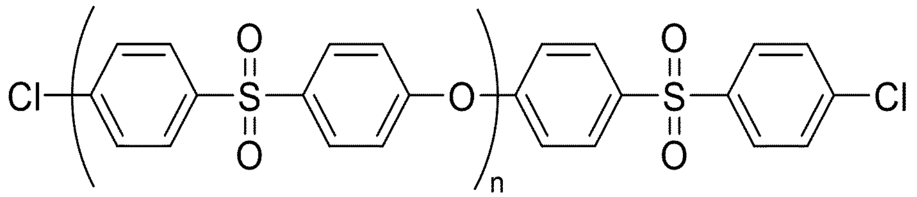

(G7)

[Chem 10]

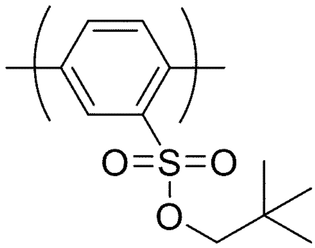

(G8)

[Chem 11]

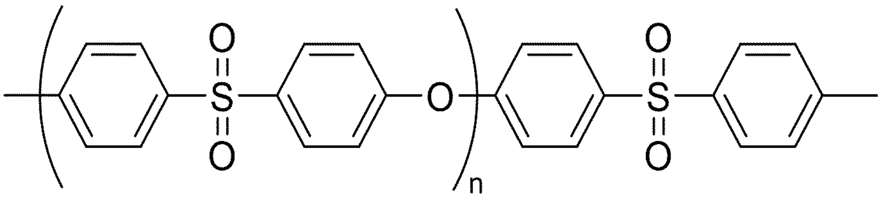

(G9)

[Preparation of Solution for Forming First Electrolyte Layer]

Each of Solutions P1 to P4 containing various types of hydrocarbon-based polymer electrolytes were prepared in the following manner. Further, a commercially available product was prepared as Solution P5 containing a fluoropolymer electrolyte.

[Solution P1]: A solution containing a polyether ketone-based block copolymer (indicated as "C1" in Table 1. The same applies hereinafter.)

Into a 2,000 mL SUS polymerization apparatus equipped with a stirrer, a nitrogen introduction pipe and a Dean-Stark trap, 16 g of the ionic oligomer a2 and 11 g of the non-ionic oligomer a1 were introduced. NMP was added to the resulting mixture such that the total amount of oligomers introduced was 7wt%, and the reaction was allowed proceed at 105°C for 24 hours.

The reaction liquid was subjected to reprecipitation in a large amount of a mixed liquid of isopropyl alcohol/NMP (mass ratio 2/1), and the resulting precipitates were collected by filtration and washed with a large amount of isopropyl alcohol blocks, to obtain a block copolymer C1. The thus obtained polyether ketone-based block copolymer C1 had a weight average molecular weight of 340,000, and an ion exchange capacity (IEC) of 2.1 meq/g. Subsequently, the block copolymer C1 was dissolved in NMP, and the resulting solution was filtered under pressure using a 1 μm polypropylene filter, to obtain Solution P1 (concentration: 13% by mass). The resulting Solution P1 had a viscosity of 1,300 mPa·s.

[Solution P2]: A solution containing a polyether ketone-based random copolymer (C2)

Into a 5 L reaction vessel equipped with a stirrer, a nitrogen introduction pipe and a Dean-Stark trap, 129 g of K-DHBP synthesized in Synthesis Example 1, 93 g of 4,4'-biphenol (a reagent manufactured by Sigma-Aldrich Co. LLC.), and 422 g (1.0 mol) of disodium-3,3'-disulfonate-4,4'-difluorobenzophenone synthesized in Synthesis Example 2 were introduced. After nitrogen replacement, 3,000 g of NMP, 450 g of toluene, and 232 g of 18-crown-6 (a reagent manufactured by FUJIFILM Wako Pure Chemical Corporation) were added to the resulting mixture. After confirming that all the monomers had dissolved, 304 g of potassium carbonate (a reagent manufactured by Sigma-Aldrich Co. LLC.) was added, the resulting mixture was dehydrated at 160°C under reflux, and then heated to remove toluene. Thereafter, desalting polycondensation was carried out at 200°C for one hour. The resulting polyether ketone-based random copolymer C2 had a weight average molecular weight of 320,000, and an ion exchange capacity (IEC) of 2.1.

Subsequently, NMP was added to dilute the polymerization stock solution to a viscosity of 500 mPa·s. An angle rotor, RA-800, was set to an inverter/compact high-speed refrigerated centrifuge (model number: 6930) manufactured by Kubota Seisakusho, K. K., and the direct centrifugation of the polymerization stock solution was carried out at 25°C for 30 minutes, at a centrifugal force of 20,000 G. The precipitated solid (cake) and the supernatant (coating solution) were clearly and successfully separated, and thus, the supernatant was collected. Thereafter, the supernatant was distilled under reduced pressure at 80°C with stirring, to remove NMP until the polymer concentration reached 14% by mass, and further

filtered under pressure with a 5 μm polyethylene filter, to obtain Solution P2. The resulting Solution P2 had a viscosity of 1,000 mPa·s.

[Solution P3]: A solution containing a polyarylene-based block copolymer (C3) represented by the following general formula (G10)

A quantity of 540 mL of dry N,N-dimethylacetamide (DMAc) was added under nitrogen, to a mixture of: 135.0 g (0.336 mol) of neopentyl 3-(2,5-dichlorobenzoyl) benzenesulfonate; 40.7 g (5.6 mmol) of the non-ionic oligomer synthesized in Synthesis Example 6 and represented by general formula (G6); 6.71 g (16.8 mmol) of 2,5-dichloro-4'-(1-imidazolyl)benzophenone; 6.71 g (10.3 mmol) of bis (triphenylphosphine)nickel dichloride; 35.9 g (0.137 mol) of triphenylphosphine; 1.54 g (10.3 mmol) of sodium iodide; and 53.7 g (0.821 mol) of zinc.

The reaction system was heated under stirring (heated finally to 79°C), and allowed to react for three hours. An increase in the viscosity was observed in the system during the reaction. The polymerization reaction solution was diluted with 730 mL of DMAc, stirred for 30 minutes, and filtered using Celite as a filtration aid.

The resulting filtrate was concentrated using an evaporator, 43.8 g (0.505 mol) of lithium bromide was added thereto, and the reaction was allowed to proceed at an internal temperature of 110°C for 7 hours under a nitrogen atmosphere. After the completion of the reaction, the reaction liquid was cooled to room temperature, and poured into 4 L of acetone to allow solidification. The solidified product was collected by filtration, dried in air, then crushed with a mixer, and washed with 1,500 mL of 1 N hydrochloric acid with stirring. After the completion of the filtration, the resulting product was washed with ion exchanged water until the pH of the washing liquid reached 5 or more, and then dried overnight at 80°C, to obtain 23.0 g of a polyarylene-based block copolymer C3. The thus obtained polyarylene-based block copolymer C3 after deprotection had a weight average molecular weight of 190,000, and an ion exchange capacity (IEC) of 2.0. The resulting polyarylene-based block copolymer C3 was dissolved in a mixed organic solvent of N-methyl-2-pyrrolidone and methanol at a ratio of 30/70 (% by mass) so as to achieve a concentration of 0.1 g/g, to obtain Solution P3. The resulting Solution P3 had a viscosity of 1,200 mPa·s.

[Chem 12]

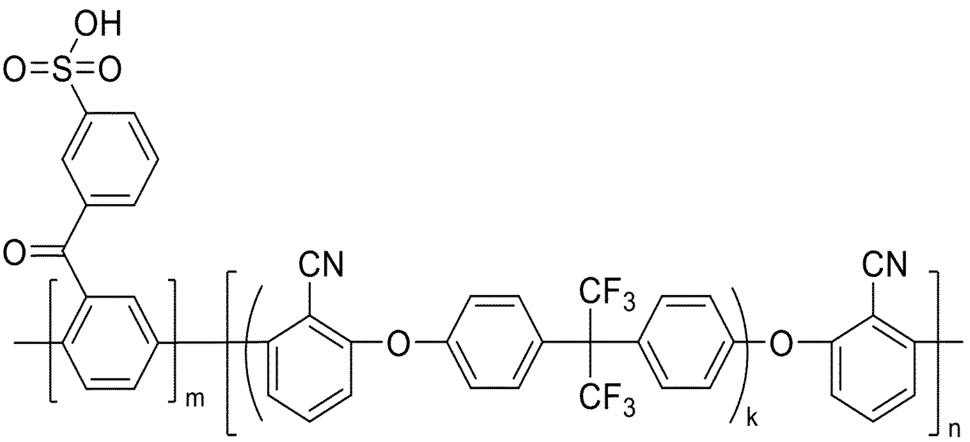

(G10)

[Solution P4]: A solution containing a polyether sulfone-based block copolymer (C4)

A quantity of 0.23 g of the block copolymer precursor b1 obtained in Synthesis Example 7 was weighed, and added to a mixed solution of 0.16 g of lithium bromide monohydrate and 8 mL of NMP, and the resulting mixture was allowed to react at 120°C for 24 hours. The reaction mixture was poured into 80 mL of 6 mol/L hydrochloric acid, and stirred for one hour. The precipitated solid was separated by filtration. The separated solid was dried, to obtain a grayish white block copolymer C4 including a segment represented by the above-described general formula (G9) and a segment represented by following chemical formula (G11). The thus obtained polyether sulfone-based block copolymer C4 had a weight average molecular weight of 190,000, and an ion exchange capacity (IEC) of 2.0. The resulting polyether sulfone-based block copolymer C4 was dissolved in an organic solvent of N-methyl-2-pyrrolidone and methanol at a ratio of 30/70 (% by mass) so as to achieve a concentration of 0.1 g/g, to obtain Solution P4. The resulting Solution P4 had a viscosity of 1,300 mPa·s.

[Chem 13]

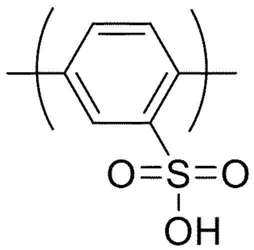

(G11)

[Solution P5]: A Solution containing fluoropolymer electrolyte (C5)

A commercially available "Nafion" (registered trademark) dispersion liquid (product number: D2020, manufactured by The Chemours Company TT, LLC) was used as Solution P5.

[Preparation of Solution for Forming Second Electrolyte layer]

Each of Solutions A1 to A4 were prepared in the following manner.

[Solution A1]

- · Carbon particles: 10 parts of carbon black ("VULCAN" (registered trademark) XC72, manufactured by Cabot Corporation)
- · A fluoropolymer electrolyte: 8 parts by mass in terms of solid content of "Nafion" (registered trademark) product number: D2020 (a dispersion liquid in which the mass ratio of electrolyte, water and 1-propanol is 20:34:46), manufactured by The Chemours Company TT, LLC.
- · Solvent: a mixed solvent of water and 1-propanol at a mass ratio of 4:6.

The carbon particles and the polymer electrolyte described above were dispersed in the above-described solvent using a bead mill, to prepare Solution A1 having a solid content concentration of 10% by mass. The ratio (I/C) of the mass (I) of the polymer electrolyte to the mass (C) of the carbon particles in Solution A1 is 0.8.

[Solution A2]

Solution A2 was prepared in the same manner as Solution A1, except that the amount of the fluoropolymer electrolyte added was changed to 5 parts by mass. The ratio (I/C) of the mass (I) of the polymer electrolyte to the mass (C) of the carbon particles in Solution A2 is 0.5.

[Solution A3]

Solution A3 was prepared in the same manner as Solution A1, except that the amount of the fluoropolymer electrolyte added was changed to 12 parts by mass. The ratio (I/C) of the mass (I) of the polymer electrolyte to the mass (C) of the carbon particles in Solution A3 is 1.2.

[Solution A4]

Solution A4 was prepared in the same manner as Solution A1, except that the amount of the fluoropolymer electrolyte added was changed to 16 parts by mass. The ratio (I/C) of the mass (I) of the polymer electrolyte to the mass (C) of the carbon particles in Solution A3 is 1.6.

[Example 1]

An electrolyte membrane was prepared in the following manner, by laminating a second electrolyte layer on the first main surface of a first electrolyte layer.

[Preparation of First Electrolyte Layer]

A PET film "Lumirror" (registered trademark) 125T60 manufactured by Toray Industries, Inc. was pasted and fixed on an SUS plate, using a "KAPTON" (registered trademark) tape. Solution P1 was cast and coated onto the PET film, followed by drying, to obtain a polymer membrane in the form of a film. Further, the resulting polymer membrane was immersed in a 10% by mass aqueous solution of sulfuric acid at 80°C for 24 hours to allow proton exchange and deprotection reactions to proceed, and then sufficiently washed by being immersed in a large excess amount of pure water for 24 hours, to obtain a first electrolyte layer. The thus obtained first electrolyte layer had a thickness of 80 μm.

[Lamination of Second Electrolyte Layer]

Solution A1 was cast and coated onto the first electrolyte layer and dried, to laminate a second electrolyte layer on the first electrolyte layer. The thus obtained second electrolyte layer had a thickness of 10 μm.

[Examples 2 to 18 and Comparative Examples 1 to 3]

In each of the Examples and comparative Examples, an electrolyte membrane was produced in the same manner as in Example 1, except that the type of the solution for forming a first electrolyte layer and the thickness of the resulting layer as well as the type of the solution for forming a second electrolyte layer and the thickness of the resulting layer were changed as shown in Table 1. In Comparative Example 3, the lamination of the second electrolyte layer was not performed.

[Example 19]

[Preparation of First Electrolyte Layer]

A PET film "Lumirror" (registered trademark) 125T60 manufactured by Toray Industries, Inc. was pasted and fixed on an SUS plate, using a "KAPTON" (registered trademark) tape. Solution P1 was cast and coated onto the PET film using a knife coater, and the following porous substrate (mesh woven fabric) was pasted thereon so as to be impregnated with Solution P1. Solution A1 was further coated on the porous substrate and dried. The resultant was immersed in a 10% by mass aqueous solution of sulfuric acid at 80°C for 24 hours to allow proton exchange and deprotection reactions to proceed, and then sufficiently washed by being immersed in a large excess amount of pure water for 24 hours, to obtain a first electrolyte layer. The thus obtained electrolyte membrane is an electrolyte membrane having a three-layer configuration, which membrane has a hydrocarbon-based polymer electrolyte layer on each of both surfaces of the composite portion including the porous substrate and the hydrocarbon-based polymer electrolyte. The thicknesses of the respective layers were as follows, in the order from the side of the PET film: non-composite portion (thickness: 33 μm)/ composite portion (thickness: 35 μm)/ non-composite portion (thickness: 32 μm). The total thickness of the electrolyte membrane was 100 μm.

[Porous Substrate]

A mesh woven fabric composed of liquid crystal polyester fibers produced in Production Example 1 of WO 2019/188960 was used.

[Lamination of Second Electrolyte Layer]

The second electrolyte layer was laminated on the first electrolyte layer prepared as described above, in the same manner as in Example 1, to prepare an electrolyte membrane.

[Example 20]

The first electrolyte layer was formed on the PET film, in the same manner as in Example 1. Subsequently, the cathode catalyst layer (dry thickness: 10 μm) and the second electrolyte layer (Solution A1) described above were laminated on a commercially available polytetrafluoroethylene film, in the order mentioned, to prepare a cathode catalyst layer transfer sheet. In the same manner, the anode catalyst layer (dry thickness: 10 μm) described above was laminated on a commercially available polytetrafluoroethylene film, to prepare an anode catalyst layer transfer sheet.

The PET film was peeled off from the first electrolyte layer prepared as described above. The cathode catalyst layer transfer sheet was laminated on one surface of the first electrolyte layer, the anode catalyst layer transfer sheet was

laminated on the other surface thereof, and the resulting laminate was heat-pressed at 150°C and 5 MPa for 3 minutes, to bond with one another. Thereafter, the polytetrafluoroethylene films were peeled off from the respective catalyst layer transfer sheets, to obtain a catalyst coated membrane.

[Evaluation]

The water electrolysis performance and the durability of each of the electrolyte membranes prepared in the Examples and Comparative Examples described above were evaluated. These results are shown in Table 1.

[Table 1]

Table 1

| | Electrolyte Membrane | | | | | | | | Evaluation | |
|---|---|---|---|---|---|---|---|---|---|---|
| | First Electrolyte Layer | | | | Second Electrolyte Layer | | | T2/T1 | Water Electrolysis Performance | Durability |
| | Solution | Polymer | Thickness (T1) (μm) | Porous Substrate | Solution | I/C | Thickness (T2) (μm) | | Initial Applied Voltage (V) | Rate of Voltage Increase (%) |
| Example 1 | P1 | C1 | 80 | - | A1 | 0.8 | 10 | 0.13 | 1.75 | 0.6 |
| Example 2 | P1 | C1 | 80 | - | A2 | 0.5 | 10 | 0.13 | 1.78 | 2.2 |
| Example 3 | P1 | C1 | 80 | - | A3 | 1.2 | 10 | 0.13 | 1.73 | 1.7 |
| Example 4 | P1 | C1 | 80 | - | A4 | 1.6 | 10 | 0.13 | 1.72 | 2.3 |
| Example 5 | P1 | C1 | 80 | - | A1 | 0.8 | 4 | 0.05 | 1.73 | 2.9 |
| Example 6 | P1 | C1 | 80 | - | A1 | 0.8 | 6 | 0.08 | 1.74 | 1.7 |
| Example 7 | P1 | C1 | 80 | - | A1 | 0.8 | 12 | 0.15 | 1.77 | 0.6 |
| Example 8 | P1 | C1 | 40 | - | A1 | 0.8 | 10 | 0.25 | 1.69 | 3.0 |
| Example 9 | P1 | C1 | 50 | - | A1 | 0.8 | 7 | 0.14 | 1.70 | 2.4 |
| Example 10 | P1 | C1 | 100 | - | A1 | 0.8 | 10 | 0.10 | 1.77 | 0.0 |
| Example 11 | P1 | C1 | 100 | - | A1 | 0.8 | 15 | 0.15 | 1.78 | 0.0 |
| Example 12 | P1 | C1 | 100 | - | A1 | 0.8 | 30 | 0.30 | 1.79 | 2.8 |
| Example 13 | P1 | C1 | 150 | - | A1 | 0.8 | 10 | 0.07 | 1.80 | 0.0 |
| Example 14 | P1 | C1 | 150 | - | A1 | 0.8 | 20 | 0.13 | 1.82 | 0.0 |
| Comparative Example 1 | P1 | C1 | 30 | - | A1 | 0.8 | 10 | 0.33 | 1.68 | 4.2 |
| Comparative Example 2 | P1 | C1 | 25 | - | A1 | 0.8 | 4 | 0.16 | 1.67 | 7.7 |
| Comparative Example 3 | P1 | C1 | 80 | - | | - | | - | 1.70 | 8.8 |
| Example 15 | P2 | C2 | 80 | - | A1 | 0.8 | 10 | 0.13 | 1.83 | 1.1 |
| Example 16 | P3 | C3 | 80 | - | A1 | 0.8 | 10 | 0.13 | 1.80 | 1.7 |
| Example 17 | P4 | C4 | 80 | - | A1 | 0.8 | 10 | 0.13 | 1.78 | 1.7 |

(continued)

| | Electrolyte Membrane | | | | | | | | Evaluation | |
|---|---|---|---|---|---|---|---|---|---|---|
| | First Electrolyte Layer | | | | Second Electrolyte Layer | | | T2/T1 | Water Electrolysis Performance | Durability |
| | Solution | Polymer | Thickness (T1) (μm) | Porous Substrate | Solution | I/C | Thickness (T2) (μm) | | Initial Applied Voltage (V) | Rate of Voltage Increase (%) |
| Example 18 | P5 | C5 | 80 | - | A1 | 0.8 | 10 | 0.13 | 1.88 | 0.8 |
| Example 19 | P1 | C1 | 100 | Present | A1 | 0.8 | 10 | 0.10 | 1.79 | 0.0 |
| Example 20 | P1 | C1 | 80 | - | A1 | 0.8 | 10 | 0.13 | 1.71 | 0.3 |

Reference Signs List

11 first electrolyte layer
12 second electrolyte layer
21 cathode catalyst layer
22 anode catalyst layer
101 electrolyte membrane
201 catalyst coated membrane

**Claims**

**1.** An electrolyte membrane comprising:

a first electrolyte layer having a first main surface and a second main surface; and a second electrolyte layer provided on said first main surface of said first electrolyte layer;
wherein said first electrolyte layer has a thickness of 40 μm or more and 250 μm or less, and contains a polymer electrolyte; and
wherein said second electrolyte layer contains a polymer electrolyte and carbon particles.

**2.** The electrolyte membrane according to claim 1, wherein all or part of said carbon particles contained in said second electrolyte layer are carbon particles on which a catalyst metal is not supported.

**3.** The electrolyte membrane according to claim 1 or 2, wherein all or part of said polymer electrolyte contained in said first electrolyte layer is a hydrocarbon-based polymer electrolyte.

**4.** The electrolyte membrane according to any one of claims 1 to 3, wherein all or part of said polymer electrolyte contained in said second electrolyte layer is a fluoropolymer electrolyte.

**5.** The electrolyte membrane according to any one of claims 1 to 4, wherein the ratio (I/C) of the mass (I) of said polymer electrolyte contained in said second electrolyte layer to the mass (C) of said carbon particles contained in said second electrolyte layer is from 0.4 to 2.0.

**6.** The electrolyte membrane according to any one of claims 1 to 5, wherein said second electrolyte layer has a thickness of from 3 to 30 μm.

**7.** The electrolyte membrane according to any one of claims 1 to 6, wherein the ratio (T2/T1) of the thickness (T2) of said second electrolyte membrane to the thickness (T1) of said first electrolyte layer is from 0.05 to 0.25.

**8.** The electrolyte membrane according to any one of claims 1 to 7, wherein said first electrolyte layer further comprises a porous substrate.

**9.** The electrolyte membrane according to claim 8, wherein said first electrolyte layer comprises:

a laminar portion in which said porous substrate and said polymer electrolyte are combined (composite portion); and
a laminar portion which does not include said porous substrate and includes said polymer electrolyte (non-composite portion), and which is provided on one surface or both surfaces of said composite portion.

**10.** The electrolyte membrane according to any one of claims 1 to 9, wherein the electrolyte membrane is used in a water electrolyzer.

**11.** A catalyst coated membrane comprising:

a cathode catalyst layer on the side of said first main surface of said first electrolyte layer of the electrolyte membrane according to any one of claims 1 to 10; and
an anode catalyst layer on the side of said second main surface of said first electrolyte layer of said electrolyte

membrane.

**12.** The catalyst coated membrane according to claim 11, wherein said second electrolyte layer and said cathode catalyst layer are arranged in abutment with each other, on the side of said first main surface of said first electrolyte layer.

**13.** A membrane electrode assembly comprising the catalyst coated membrane according to claim 12.

**14.** A water electrolyzer comprising the membrane electrode assembly according to claim 13.

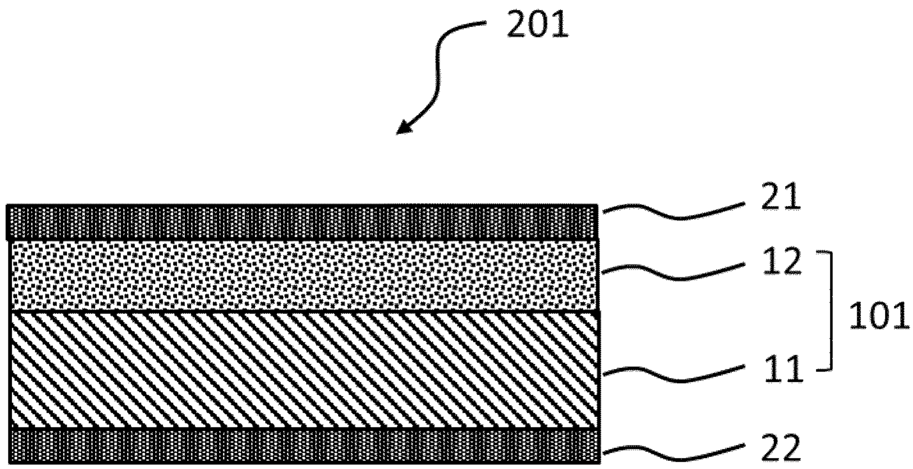


Fig. 1

**INTERNATIONAL SEARCH REPORT**

International application No. **PCT/JP2023/009286**

**A. CLASSIFICATION OF SUBJECT MATTER**

***C25B 13/08***(2006.01)i; ***C25B 1/02***(2006.01)i; ***C25B 1/04***(2021.01)i; ***C25B 9/00***(2021.01)i; ***C25B 9/23***(2021.01)i; ***C25B 11/052***(2021.01)i; ***C25B 11/053***(2021.01)i; ***C25B 11/065***(2021.01)i; ***C25B 11/081***(2021.01)i; ***C25B 13/02***(2006.01)i; ***C25B 13/04***(2021.01)i; ***H01B 1/06***(2006.01)i; ***H01M 8/10***(2016.01)i; ***H01M 8/1018***(2016.01)i; ***H01M 8/1039***(2016.01)i; ***H01M 8/1046***(2016.01)i; ***H01M 8/1051***(2016.01)i; ***H01M 8/1053***(2016.01)i; ***H01M 8/1058***(2016.01)i; ***H01M 8/1067***(2016.01)i

FI: C25B13/08 301; H01M8/1067; H01M8/1018; H01M8/1051; H01M8/1053; H01M8/1039; H01M8/1058; C25B13/04 301; C25B9/23; C25B1/02; C25B9/00 A; H01M8/10 101; C25B1/04; C25B11/052; C25B11/081; C25B11/053; C25B11/065; H01M8/1046; H01B1/06 A; C25B13/02 301; C25B13/08 302

According to International Patent Classification (IPC) or to both national classification and IPC

**B. FIELDS SEARCHED**

Minimum documentation searched (classification system followed by classification symbols)

C25B13/08; C25B1/02; C25B1/04; C25B9/00; C25B9/23; C25B11/052; C25B11/053; C25B11/065; C25B11/081; C25B13/02; C25B13/04; H01B1/06; H01M8/10; H01M8/1018; H01M8/1039; H01M8/1046; H01M8/1051; H01M8/1053; H01M8/1058; H01M8/1067

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/196278 A1 (TORAY INDUSTRIES, INC.) 01 October 2020 (2020-10-01) claims, paragraphs [0011], [0112]-[0114], fig. 1 | 1-14 |
| Y | JP 2008-512844 A (POLYFUEL, INC.) 24 April 2008 (2008-04-24) paragraphs [0031]-[0034] | 1-14 |
| Y | JP 2009-510675 A (GORE ENTERPRISE HOLDINGS INC.) 12 March 2009 (2009-03-12) paragraphs [0040]-[0042], [0088]-[0091], fig. 1-4 | 8-14 |
| A | JP 2018-159121 A (KABUSHIKI KAISHA TOSHIBA) 11 October 2018 (2018-10-11) paragraphs [0012]-[0030], fig. 1 | 1-14 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/009286

C. DOCUMENTS CONSIDERED TO BE RELEVANT

| Category* | Citation of document, with indication, where appropriate, of the relevant passages | Relevant to claim No. |
|---|---|---|
| A | JP 2009-533801 A (UTC POWER CORP.) 17 September 2009 (2009-09-17) paragraphs [0013]-[0025], fig. 1-3 | 1-14 |

Form PCT/ISA/210 (second sheet) (January 2015)

**INTERNATIONAL SEARCH REPORT**
**Information on patent family members**

International application No.
**PCT/JP2023/009286**

| Patent document cited in search report | Publication date (day/month/year) | Patent family member(s) | Publication date (day/month/year) |
|---|---|---|---|
| WO 2020/196278 A1 | 01 October 2020 | US 2022/0216494 A1<br>claims, paragraphs [0010], [0108]-[0110], fig. 1<br>EP 3951017 A1<br>CN 113454270 A<br>KR 10-2021-0142623 A<br>TW 202104670 A | |
| JP 2008-512844 A | 24 April 2008 | US 2006/0068268 A1<br>paragraphs [0031]-[0034]<br>WO 2006/029185 A2<br>EP 1800364 A2<br>CA 2579622 A<br>KR 10-2007-0100693 A<br>CN 101095256 A<br>AU 2005282498 A<br>TW 200633293 A | |
| JP 2009-510675 A | 12 March 2009 | US 2007/0072036 A1<br>paragraphs [0051]-[0053], [0122]-[0125], fig. 1-4<br>WO 2007/038040 A2<br>EP 1929574 A2<br>KR 10-2008-0047574 A<br>CA 2620860 A<br>CN 101273487 A<br>AT 544189 T | |
| JP 2018-159121 A | 11 October 2018 | US 2018/0274110 A1<br>paragraphs [0017]-[0035], fig. 1<br>EP 3378970 A1 | |
| JP 2009-533801 A | 17 September 2009 | US 2009/0017344 A1<br>paragraphs [0016]-[0028], fig. 1-3<br>WO 2007/117230 A1<br>EP 2008333 A1<br>CN 101416342 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005133146 A
- WO 2019188960 A